# EUROPEAN PATENT SPECIFICATION

(11) **EP 1 783 192 B1**
(45) Date of publication and mention of the grant of the patent: **21.03.2012**
(21) Application number: 05743272.6
(22) Date of filing: 27.05.2005
(51) Int. Cl.: C09K 11/77

(54) **PHOSPHOR AND LIGHT-EMITTING DEVICE USING SAME**
LEUCHTSTOFF UND DARAUF BASIERENDE LICHTEMITTIERENDE VORRICHTUNG
PHOSPHORE ET APPAREIL ÉMETTEUR DE LUMIÈRE L'UTILISANT

(30) Priority: 18.06.2004 JP 2004181765; 04.04.2005 JP 2005107874
(43) Date of publication of application: 09.05.2007
(73) Proprietor: Daiden Co., Ltd., Kurume-shi, Fukuoka-ken, 830-8511 (JP)
(72) Inventor: TANNO, Hiroaki, DAIDEN CO., LTD., Saga 8490124 (JP); ZHANG, Shuxiu, c/o DAIDEN CO., LTD., Saga 8490124 (JP)
(74) Representative: Behnisch, Werner
(86) International application number: PCT/JP2005/009763
(87) International publication number: WO 2005/123877

(56) References cited:
- WO-A1-03/069686
- JP-A- 4 041 585
- JP-A- 9 286 983
- JP-A- 02 187 490
- JP-A- 09 111 235
- JP-A- 53 054 184
- JP-A- 61 246 283
- JP-A- 2002 076 446
- JP-A- 2002 359 404
- JP-A- 2003 313 551
- JP-A- 2005 063 728
- DATABASE WPI Week 198417 Thomson Scientific, London, GB; AN 1984-104334 XP002542917 -& JP 59 047288 A (TOKYO SHIBAURA DENKI KK) 16 March 1984 (1984-03-16)
- VADAN M. ET AL: 'Synthesis of cerium activated strontium-magnesium orthophosphate phosphors.' PROCEEDINGS OF SPIE-THE INTERNATIONAL SOCIETY FOR OPTICAL ENGINEERING (SIXTH CONFERENCE ON OPTICS,2000). vol. 4430, 2001, pages 334 - 341, XP002991547
- THAKARE D.S. ET AL: 'UV-emitting Phosphors: synthesis, photoluminiscence and applications.' PHYSICA STATUS SOLIDI A. APPLIED RESEARCH. vol. 201, no. 3, February 2004, pages 574 - 581, XP002991548

## Description

### Technical Field

The present invention pertains to a phosphor and a light-emitting device using same. In more detail, the present invention pertains to a novel phosphor capable of exhibiting strong light emissions over a wide excitation wavelength range, and a light-emitting device using such a phosphor.
In particular, the present invention pertains to a novel phosphor that provides stronger light emission intensities under ultraviolet excitation than are obtained from a conventional blue phosphor of europium-activated barium-magnesium-aluminum oxide phosphor (may be called "BAM phosphor" in what follows), and a light-emitting device using such a phosphor.
The present invention also pertains to a novel phosphor that is well-suited for use as a blue phosphor in products such as white LEDs and fluorescent lamps using an ultraviolet excitation source, and a light-emitting device using such a phosphor.
The present invention further pertains to a novel phosphor that can be used as a blue phosphor in products such as PDPs (plasma display panels) having vacuum ultraviolet light as an excitation source, and a light-emitting device using such a phosphor.

### Prior Art

Generally, phosphors undergo excitation by electromagnetic waves such as ultraviolet light, electron beams, and x-rays, and thereby emit light in the near-ultraviolet to visible range. Depending on the phosphor type, these phosphors may provide a variety of spectral distributions, so that in combination with an appropriate excitation source, a wide variety of phosphors have been developed.

By combining light in the three primary colors (red, blue, and green), all hues of colors can be expressed by phosphor emissions. Therefore, of the various colors that can be emitted, a variety of phosphors have been researched that can emit red, blue, and green in particular.

Of those three color phosphors, blue phosphors have an especially profound impact on lamp characteristics, and of the three color phosphors, the blue phosphors are particularly important. BAM phosphors are well-known as blue phosphors, and are widely used in fluorescent lamps and as PDP phosphors.
Non-patent reference 1: The Phosphor Handbook (Phosphor Research Society [Keikotai Dougakukai], Ohm-sha, 1987, pp. 225-226 and 332-334)
JP9286983 A discloses fluorescent phosphors, in particular of the chemical formula (Ca,Ba,Sr,Mg)O·xAl₂O3·yP₂O₅·zSiO₂: Eu²⁺,Mn²⁺, which are excited by UV radiation and are employed in fluorescent lamps.
JP9111235 A discloses a fluorescent phosphor of type (Sr_{1-a-b-c-d}CaₐBa_{b}Mg_{c}Eu_{d})₂P₂O₇, which emits blue light when excited by UV radiation and is employed in fluorescent lamps.

Additionally, in recent years there has been considerable focus on white LEDs as a next-generation lighting source to replace fluorescent lamps. White LEDs are more energy-efficient and have a longer lifespan than fluorescent lamps, and because they do not use mercury, they have the advantage of being much easier on the environment.

There are basically two ways to produce white LED light sources. One is to use a single type of LED ("one-chip type"), and the other is to simultaneously use multiple types of LEDs with different colors ("multi-chip type").

In the former, one-chip type, a blue LED or an ultraviolet LED is used as the phosphor excitation light source, and the light emitted by the phosphor is used. In contrast, in the latter, multi-chip type, multiple types of LEDs with different colors, such as LEDs for the three primary colors (red, green and blue, R/G/B), or LEDs for complementary colors (blue and yellow), are activated simultaneously. Advantages of the former, one-chip type, since it thus uses only a single type of LED, include less expense and easier design for drive circuits than for the multi-chip type.

Of the one-chip type units described above, there are lights already available that use blue LEDs as the excitation source. These lights use a combination of blue LEDs and YAG (yttrium, aluminum, garnet) phosphors, the two colors of light (blue and yellow) thereby combining to provide white light. However, because this light is created by combining blue and yellow light, there are difficulties with color reproducibility. For example, the white light from this white LED can cause red objects to appear darker than they truly are.

Accordingly, in recent years, there has been considerable anticipation of white LEDs using a UV LED as the excitation source. Such units combine UV LEDs and three-wavelength-type (red, green, blue) phosphors to produce white light, so there are none of the above-mentioned problems with color reproducibility.

Just as with the fluorescent lamps described above, the blue phosphors used in white LEDs are important as they greatly affect the characteristics of light-emitting devices. However, the difference between white LEDs and fluorescent lamps is that while the excitation wavelength of fluorescent lamps is 254 nm, the excitation wavelength of white LEDs lies at the longer wavelength of 380 nm. In recent years, the "BAM phosphor" mentioned above has been proposed for use as a blue phosphor used in white LEDs.

### Disclosure of Invention

### Problems that the Invention Is to Solve

As described above, the excitation source differs depending on the phosphor application, so it is hoped that, with diversification of applications, phosphors characterized by strong light emissions across a wide excitation wavelength range will be developed.

In addition, as noted above, BAM phosphors have been proposed for applications involving blue phosphors, which have a particularly strong effect on the characteristics of light-emitting devices. However, BAM phosphors do not yet provide light emissions of satisfactory intensity and a higher level of luminous efficacy is desired. Additionally, although BAM phosphors emit light of moderately adequate intensity at the fluorescent lamp excitation wavelength of 254 nm as noted above, when the excitation wavelength is shifted to the longer UV LED wavelength of 380 nm, the intensity of light emission is gradually reduced. These disadvantages suggested that BAM was not necessarily an optimal material for white LED phosphors.

### (Purpose of the Present Invention)

The objective of the present invention is to provide a novel phosphor capable of exhibiting strong light emissions over a wide excitation wavelength range, and a light-emitting device using such a phosphor. Also, the present invention provides a novel phosphor that exhibits stronger light emissions particularly under ultraviolet excitation than are obtained using a conventional BAM phosphor as the blue phosphor, and a light-emitting device using such a phosphor.
The present invention also provides a novel phosphor that is well-suited for use as a blue phosphor in products such as white LEDs and fluorescent lamps using UV as an excitation source, and a light-emitting device using such a phosphor.
The present invention further provides a novel phosphor that can be used as a blue phosphor in products such as PDPs having vacuum ultraviolet light as an excitation source, and a light-emitting device using such a phosphor.

### Means of Solving the Problem

The present invention was configured as follows to achieve the purposes cited above.
The first aspect of the invention pertains to a phosphor characterized by the fact that

it is represented by the following composition formula:

(a-x)M1O·bM20·cM3O_{1.5}·dM4O_{2.5}:xLnO

(wherein M1 represents at least one alkaline earth element selected from Ca and Sr, M2 represents at least one element selected from the group composed of Be, Cu, Zn, Pb, Cd, Mg, and Sn, M3 represents at least one element selected from the group composed of Al, Ga, and In, M4 represents at least one element selected from the group composed of P and V, Ln is at least one element selected from the group composed of Pr, Sm, Nd, Gd, Eu, Tb, Dy, Ho, Tm, Er, Yb, and Mn, and the letters x, a, b, c, and d represent numbers that each satisfy the following conditions: 0 < x ≤ 0.5, 1 ≤ a ≤ 3, 0 ≤ b ≤ 4, 0 ≤ c ≤ 9, and 2 ≤ d≤9.)

The second aspect of the invention pertains to the phosphor related to the second aspect of the invention, characterized by the fact that the ranges for b and c are 0 < b ≤ 4 and 0 ≤ c ≤ 9.

The third aspect of the invention pertains to the phosphor related to the first, second, or third aspect of the invention, characterized by the fact that ultraviolet light or vacuum ultraviolet light is used as the excitation source.

The fourth aspect of the invention pertains to a light-emitting device characterized by the fact that it uses the phosphor related to the first, second, third, or fourth aspect of the invention.

The fifth aspect of the invention pertains to the light-emitting device related to the fifth aspect of the invention, characterized by the fact that ultraviolet light or vacuum ultraviolet light is used as the excitation source.

The expression "ultraviolet light or vacuum ultraviolet light" as used in the Claims and the Specification of this application is taken to include those situations involving either ultraviolet light or vacuum ultraviolet light, and also those situations involving both ultraviolet light and vacuum ultraviolet light.

### Brief Explanation of Drawings

[Fig. 1] Graph showing emission spectra for phosphor powder with ultraviolet excitation at a wavelength of 254 nm, as obtained in Working Examples 1 through 5 and Comparative Example 1.
[Fig. 2] Graph showing excitation spectra for phosphor powder as obtained in Working Examples 1 through 5 and Comparative Example 1.

### Best Mode for Carrying Out the Invention

The present invention is for a phosphor characterized according to claim 1.

In this composition formula, it is even more preferable if the ranges for b and c are 0 < b ≤ 4 and 0 < c ≤ 9.

Shown below is one example of a method of manufacture for phosphors related to the present invention.
Phosphors related to the present invention are manufactured by using, for example, the following phosphor raw materials.
(1) M1 is at least one alkaline earth element selected from the group composed of Ca and Sr. Examples of M1 raw materials are oxides of M1 elements, and compounds of M1 elements such as carbonates, nitrates, sulfates, or halides of M1 elements that can easily be converted to oxides of M1 elements at high temperatures.

(2) M2 is at least one element selected from the group composed of Be, Cu, Zn, Pb, Cd, Mg, and Sn. Examples of M2 raw materials include oxides of M2 elements, and compounds of M2 elements such as carbonates, nitrates, sulfates; or halides of M2 elements that can easily be converted to oxides of M2 elements at high temperatures.

(3) M3 is at least one element selected from the group composed of Al, Ga, and In. Examples of M3 raw materials include oxides of M3 elements, and compounds of M3 elements such as carbonates, nitrates, sulfates, or halides of M3 elements that can easily be converted to oxides of M3 elements at high temperatures.

(4) M4 is at least one element selected from the group composed of P and V. Examples of M4 raw materials include oxides of M4 elements, and compounds of M4 elements such as carbonates, nitrates, sulfates, or halides of M4 elements that can easily be converted to oxides of M4 elements at high temperatures.

(5) The added activator Ln is at least one element selected from the group composed of Pr, Sm, Nd, Gd, Eu, Tb, Dy, Ho, Tm, Er, Yb, and Mn. Examples of Ln raw materials include oxides of Ln elements, and compounds of Ln elements such as carbonates, nitrates, sulfates, or halides of Ln elements that can easily be converted to oxides of Ln elements at high temperatures.

These raw materials are measured out in specific quantities and mixed together. This mixing can be accomplished by publicly known methods, including for example wet mixing and dry mixing. Chemical reactions such as the sol-gel method and the coprecipitation method can also be used to prepare the raw materials.

In order to promote crystal growth and improve luminous efficacy, it is acceptable to add and mix as flux compounds having relatively low melting points, such as halides or borides of alkaline metals.

After this mixture of raw materials is dried, it is placed in a heat-resistant container such as an alumina crucible, and in inert gas, in a reducing atmosphere of hydrogen gas or the like, or in a reducing atmosphere containing water vapor, the mixture is baked at, for example, 800°C to 1400°C for 1 to 50 hours, to yield a phosphor of the present invention. In order to obtain uniform phosphor powder, the resulting phosphor can be crushed and rebaked repeatedly. Next, the product is powdered, washed with water, dried, and sifted as needed to prepare a phosphor of the targeted granularity.

Examples of excitation sources that can be used for the excitation of the phosphors of the present invention for light emission are electron beams, ultraviolet light, vacuum ultraviolet light obtained by discharging an electrical current within a noble gas, and X-rays. Among these examples, a phosphor of the present invention emits a stronger light than the conventional blue phosphor BAM particularly under ultraviolet excitation.

The light-emitting devices of the present invention include, but are not limited to, for example, fluorescent lamps (low-pressure mercury lamps, high-pressure mercury lamps), white LEDs using ultraviolet LEDs, CRTs, noble gas lamps, PDPs, radiation-sensitized paper, and fluorescent plates. Since the phosphors of the present invention exhibit excellent light-emission intensities, particularly under ultraviolet excitation, they can be used suitably as white LEDs or fluorescent lamps utilizing ultraviolet light excitation. Additionally, they are useful in noble gas lamps or PDPs utilizing vacuum ultraviolet light excitation.

Below, the present invention is explained specifically with reference to working examples. However, the present invention is in no way limited to these working examples.

### Working Examples

### [Working Example 1]

Raw materials were each weighed out in the following quantities and mixed together: strontium carbonate (SrCO₃) 1.33 g, magnesium hydroxide (Mg(OH)₂) 1.17 g, aluminum oxide (Al₂O₃) 1.53 g, ammonium dihydrogen phosphate (NH₄H₂PO₄) 3.45 g, and europium oxide (Eu₂O₃) 0.18 g.

These raw materials were each weighed out so that in the composition formula (ax)M1O·bM2O·cM3O_{1.5}dM4O_{2.5}:xLnO, M1 = Sr, M2 = Mg, M3 = A1, M4 = P, and Ln = Eu, and the molar ratio of the constituent ions was Sr:Mg:Al:P:Eu = 0.9:2.0:3.0:3.0:0.1 (a = 1.0, b = 2.0 C = 3.0, d = 3.0, X = 0.1).

The mixture of these was placed in an alumina crucible and introduced into an electric kiln. Then, in a nitrogen gas atmosphere containing 4 vol% hydrogen gas, the mixture was baked at 1100°C for 5 hours, yielding the targeted europium-activated composite oxide phosphor. This was designated as Working Example 1.

### [Working Examples 2 to 5]

Raw materials were each weighed out so that in the composition formula (ax)M1O·bM2O·cM3O_{1.5}dM4O_{2.5}:xLnO, M1 = Sr, M2 = Mg, M3 = Al, M4 = P, and Ln = Eu, and the molar ratio of the constituent ions was as the proportions shown in Table 1 below, to yield the europium-activated composite oxide phosphors of Working Examples 2 through 5, respectively. The raw materials and method of manufacture used were the same as for Working Example 1. Table 1 also shows together the molar ratio of the constituent ions in Working Example 1.

**[Table 1]**

| | Sr | Mg | Al | P | Eu |
|---|---|---|---|---|---|
| Working Example 1 | 0.9 | 2.0 | 3.0 | 3.0 | 0.1 |
| Working Example 2 | 0.9 | 4.0 | 5.0 | 5.0 | 0.1 |
| Working Example 3 | 0.9 | 3.0 | 6.0 | 6.0 | 0.1 |
| Working Example 4 | 0.9 | 2.0 | 7.0 | 7.0 | 0.1 |
| Working Example 5 | 1.9 | 0.0 | 8.0 | 8.0 | 0.1 |

| | | | | | |
|---|---|---|---|---|---|
| (Note) all shown as molar ratios of the constituent ions | | | | | |

### Comparative Example 1]

For Comparative Example 1, europium-activated barium-magnesium-aluminum oxide phosphor (BAM phosphor) was prepared by publicly known methods. In preparing this phosphor, Patent Reference 1 as cited above was consulted.

That is, raw materials were each weighed out in the following quantities and mixed together: barium carbonate (BaCO₃) 2.32 g, magnesium hydroxide (Mg(OH)₂) 0.75 g, aluminum oxide (Al₂O₃) 6.48 g, aluminum fluoride (AlF₃) 0.22 g, and europium oxide (Eu₂O₃) 0.23 g.

Here, barium carbonate, magnesium hydroxide, aluminum oxide, and europium oxide were weighed out so that the molar ratios of the constituent ions were Ba:Mg:Al:Eu = 0.9:1.0:10:0.1.

This mixture was placed in an alumina crucible and introduced into an electric kiln. Then, in a nitrogen gas atmosphere containing 4 vol% hydrogen gas, the mixture was baked at 1500°C for 5 hours, yielding the targeted BAM phosphor.

### (Evaluation of luminescence Characteristics)

The luminescence characteristics of the phosphors from Working Examples 1 through 5 and Comparative Example 1 were evaluated using the methods described below. A commercially available spectrofluorophotometer (FP-777W, JASCO Corporation) was used to measure each emitted spectrum at the ultraviolet wavelength of 254 nm.

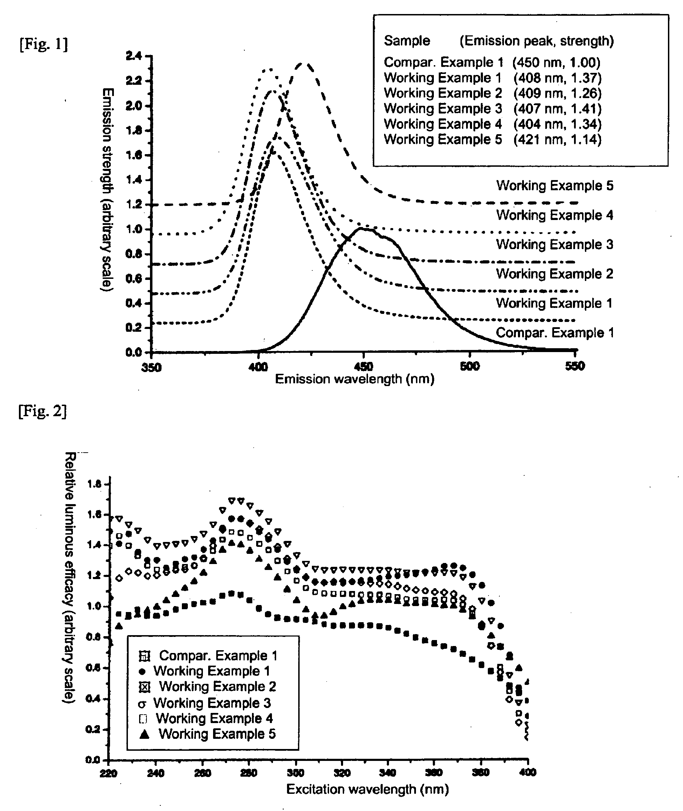

Fig. 1 shows the light emission spectra of each of the phosphor powders obtained in Working Examples 1 through 5, and in Comparative Example 1, at the ultraviolet excitation wavelength of 254 nm. As is clear from the results in Fig. 1, when the intensity of the light emitted as a result of UV excitation wavelength of 254 nm was arbitrarily designated as 100 for the BAM phosphor of Comparative Example 1, the intensity of emitted light for the phosphors from the working examples was excellent in that it was 137 for Working Example 1, 126 for Working Example 2, 141 for Working Example 3, 134 for Working Example 4, and 114 for Working Example 5.
Similar light emission spectra were obtained when the same measurements of light emission spectra were performed using ultraviolet light at a wavelength of 380 nm.

Additional measurements were performed for excitation spectra at the excitation wavelengths of 220 to 400 nm. Fig. 2 shows the excitation spectra for the phosphor powders obtained in Working Examples 1 through 5 and in Comparative Example 1. As is clear from Fig. 2, the phosphors in Working Examples 1 through 5 provided superior relative luminous efficacy in comparison to the BAM phosphor used in Comparative Example 1 at all excitation wavelengths from 220 to 400 nm.

A particular disadvantage of the BAM phosphor of Comparative Example 1 is that although this phosphor produces moderately strong light emissions at the fluorescent lamp excitation wavelength of 254 nm, its light emission strength is gradually reduced when the excitation wavelength is shifted to longer wavelengths such as ultraviolet LED's 380 nm. In contrast, the phosphor of Working Example 1 shows an excellent relative luminous efficacy that is approximately 1.8 times that of the BAM phosphor at the longer wavelengths such as ultraviolet LED's 380 nm. Results were similarly excellent for the other Working Examples (relative luminous efficacy approximately 1.4 times that of the BAM phosphor in Working Example 2, approximately 1.7 times in Working Example 3, approximately 1.4 times in Working Example 4, and approximately 1.4 times in Working Example 5.

These findings thus indicate that Working Examples 1 to 5 are well-suited to use not only in fluorescent lamps, but also as the blue phosphor in white LEDs. Furthermore, good light emission is obtained, with no sharp decreases in the strength of emitted light, over a wide excitation wavelength range of 220 to 380 nm.

Moreover, from numerous experiments, the inventors of the present application confirmed that effects identical to those from Working Examples 1 to 5 can be obtained if the following conditions are satisfied: composition formula (ax)M1O·bM2O·cM3O_{1.5}dM4O_{2.5}:xLnO, wherein M1 = Sr, M2 = Mg, M3 = Al, M4 = P, Ln = Eu, O < x ≤ 0.5, 1 ≤ a ≤ 3, 0 ≤ b ≤ 4, 0 ≤ c ≤ 9, and 2 ≤ d ≤ 9.

The terms and expressions used in this Specification are for explanatory purposes only, are not limitative, and do not exclude terms or expressions equivalent to the terms and expressions used above.

### Industrial Applicability

The present invention pertains to a light-emitting material capable of exhibiting strong light emissions over a wide excitation wavelength range. In addition, it provides stronger light emission intensities particularly under ultraviolet excitation than are obtained from a BAM phosphor, which is a conventional blue phosphor. Furthermore, it is well-suited for use as a blue phosphor in products such as white LEDs and fluorescent lamps using ultraviolet light as an excitation source, and can also be used as a blue phosphor in products such as PDPs using vacuum ultraviolet light as an excitation source. Use of the phosphor of the present invention makes it possible to provide excellent light-emitting devices.

## Claims

1. A phosphor **characterized by** the fact that it is represented by the composition formula
(a-x)M1O · bM2O · cM3O_{1.5} dM4O_{2.5} : xLnO
wherein M1 represents at least one alkaline earth element selected from Ca and Sr, M2 represents at least one element selected from the group consisting of Be, Cu, Zn, Pb, Cd, Mg, and Sn, M3 represents at least one element selected from the group consisting of Al, Ga, and In, M4 represents at least one element selected from the group consisting of P and V, Ln represents at least one element selected from the group consisting of Pr, Sm, Nd, Gd, Eu, Tb, Dy, Ho, Tm, Er, Yb, and Mn, and the letters x, a, b, c, and d represent numbers that each satisfy the following conditions: 0 < x ≤ 0.5, 1 ≤ a ≤ 3, 0 ≤ b ≤ 4, 0 ≤ c ≤ 9, and 2 ≤ d ≤ 9.

2. The phosphor in accordance with Claim 1, **characterized by** the fact that the ranges for band c are 0 < b ≤ 4 and 0 < c ≤ 9.

3. The phosphor in accordance with Claim 1 or 2, **characterized by** the fact that ultraviolet light or vacuum ultraviolet light is used as an excitation source.

4. A light-emitting device **characterized by** the fact that it uses the phosphor of Claim 1, 2, or 3.

5. The light-emitting device in accordance with Claim 4, **characterized by** the fact that ultraviolet light or vacuum ultraviolet light is used as an excitation source.

## Patentansprüche

1. Leuchtstoff, charakterisiert durch die Tatsache, dass er dargestellt ist durch die Zusammensetzungsformel
(a-x)M1O · bM2O · cM3O_{1,5} · dM4O_{2,5} : xLnO
wobei M1 zumindest ein Erdalkalielement, ausgewählt aus Ca und Sr, darstellt, M2 zumindest ein Element, ausgewählt aus der Gruppe, bestehend aus Be, Cu, Zn, Pb, Cd, Mg und Sn darstellt, M3 zumindest ein Element, ausgewählt aus der Gruppe, bestehend aus Al, Ga, und In darstellt, M4 zumindest ein Element, ausgewählt aus der Gruppe, bestehend aus P und V darstellt, Ln zumindest ein Element, ausgewählt aus der Gruppe, bestehend aus Pr, Sm, Nd, Gd, Eu, Tb, Dy, Ho, Tm, Er, Yb, und Mn darstellt, und die Buchstaben x, a, b, c, und d Nummern darstellen, die jeweils die folgenden Bedingungen erfüllen: 0<x≤0,5, 1≤a≤3, 0≤b≤4, 0≤c≤9, und 2≤d≤9.

2. Leuchtstoff gemäß Anspruch 1, **gekennzeichnet durch** die Tatsache, dass die Bereiche für b und c 0<b≤4 und 0<c≤9 sind.

3. Leuchtstoff gemäß Anspruch 1 oder 2, **gekennzeichnet durch** die Tatsache, dass ultraviolettes Licht oder Vakuum-ultraviolettes Licht als eine Anregungsquelle verwendet wird.

4. Licht emittierendes Gerät, **gekennzeichnet durch** die Tatsache, dass es den Leuchtstoff von Anspruch 1, 2 oder 3 verwendet.

5. Licht emittierendes Gerät gemäß Anspruch 4, **gekennzeichnet durch** die Tatsache, dass ultraviolettes Licht oder Vakuum-ultraviolettes Licht als eine Anregungsquelle verwendet wird.

## Revendications

1. Substance fluorescente, **caractérisée en ce qu'**elle est représentée par la formule de composition suivant
(a-x) M1O · bM2O · cM3O_{1.5} · dM4O_{2.5} : xLnO
dans laquelle M1 représente au moins un élément alcalino-terreux choisi parmi Ca et Sr, M2 représente au moins un élément choisi parmi le groupe constitué par Be, Cu, Zn, Pb, Cd, Mg et Sn, M3 représente au moins un élément choisi parmi le groupe constitué par Al, Ga et In, M4 représente au moins un élément choisi parmi le groupe constitué par P et V, Ln représente au moins un élément choisi parmi le groupe constitué par Pr, Sm, Nd, Gd, Eu, Tb, Dy, Ho, Tm, Er, Yb et Mn, les lettres x, a, b, c et d représentent des nombres dont chacun satisfait aux conditions suivantes :
0 < x ≤ 0,5 ; 1 ≤ a ≤ 3 ; 0 ≤ b ≤ 4 ; 0 ≤ c ≤ 9 et 2 ≤ d ≤ 9.

2. Substance fluorescente selon la revendication 1, **caractérisée en ce que** les plages pour b et c sont 0 < b ≤ 4 et 0 < c ≤ 9.

3. Substance fluorescente selon la revendication 1 ou 2, **caractérisée en ce que** la lumière ultraviolette ou la lumière ultraviolette du vide sert de source d'excitation.

4. Dispositif électroluminescent, **caractérisé en ce qu'**il utilise la substance fluorescente selon la revendication

5. Dispositif électroluminescent selon la revendication 4, **caractérisé en ce que** la lumière ultraviolette ou la lumière ultraviolette du vide sert de source d'excitation.
